# EUROPÄISCHE PATENTSCHRIFT

(11) **EP 1 807 296 B1**
(45) Veröffentlichungstag und Bekanntmachung des Hinweises auf die Patenterteilung: **08.10.2008**
(21) Anmeldenummer: 05801439.0
(22) Anmeldetag: 18.10.2005
(51) Int. Cl.: B60T 17/02, B62D 21/12

(54) **DRUCKLUFTVERSROGUNGSEINRICHTUNG UND VERFAHREN ZUM BETREIBEN EINER DURCHLUFTVERSORGUNGSEINRICHTUNG**
COMPRESSED AIR SUPPLY DEVICE AND METHOD FOR OPERATING A COMPRESSED AIR SUPPLY DEVICE
SYSTEME D'ALIMENTATION EN AIR COMPRIME ET PROCEDE D'UTILISATION D'UN SYSTEME D'ALIMENTATION EN AIR COMPRIME

(30) Priorität: 25.10.2004 DE 102004051812
(43) Veröffentlichungstag der Anmeldung: 18.07.2007
(73) Patentinhaber: KNORR-BREMSE SYSTEME FÜR NUTZFAHRZEUGE GMBH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2005/011190
(87) Internationale Veröffentlichungsnummer: WO 2006/045490

(56) Entgegenhaltungen:
- EP-A- 1 464 556
- EP-A- 1 561 613
- WO-A-20/05018965
- US-A1- 2005 017 474
- US-B1- 6 416 069

## Beschreibung

Die Erfindung betrifft eine Druckluftversorgungseinrichtung mit mindestens einem Drucklufteingang und mehreren Druckluftausgängen zum Versorgen mehrerer Bremskreise eines Nutzkraftfahrzeugs mit aufbereiteter Druckluft, und einem Steuergerät zum Steuern von mit der Druckluftversorgung in Zusammenhang stehenden Vorgängen.

Die Erfindung betrifft weiterhin ein Verfahren zum Betreiben einer Druckluftversorgungseinrichtung mit mindestens einem Drucklufteingang und mehreren Druckluftausgängen zum Versorgen mehrerer Bremskreise eines Nutzkraftfahrzeugs mit aufbereiteter Druckluft, und einem Steuergerät zum Steuern von mit der Druckluftversorgung in Zusammenhang stehenden Vorgängen.

Druckluftversorgungseinrichtungen beziehungsweise Luftaufbereitungsanlagen werden im Nutzkraftfahrzeugbereich eingesetzt, um Bremsanlagen mit aufbereiteter, das heißt insbesondere getrockneter Luft zu versorgen. Die in der Luftaufbereitungsanlage aufbereitete Luft wird der Luftaufbereitungsanlage über Druckluftausgänge entnommen und in Druckluftbehältern zur weiteren Verwendung durch die Bremskreise gespeichert.

Neben der Bremsanlage werden durch die gattungsgemäßen Druckluftversorgungseinrichtungen auch andere Verbraucher mit Druckluft versorgt. Beispielsweise ist an Druckluftversorgungseinrichtungen ein Ausgang vorgesehen, über den die primäre Druckluft für eine Liftachseinrichtung zur Verfügung gestellt wird. Dieser Druckluftausgang ist mittels eines Überströmventils mit begrenzter Rückströmung gegen den Rest der Anlage abgesichert. Die Liftachseinrichtung stellt mittels einer Ventileinrichtung den den Hinterachsen zugeordneten Federbälgen Druckluft zur Verfügung, wobei diese Vorgänge von einer elektronischen Liftachssteuerung überwacht und gesteuert werden.

EP 1464556 beschreibt eine gattungsgemäße Druckluftaufbereitungseinrichtung.

Der Erfindung liegt die Aufgabe zugrunde, eine Druckluftversorgungseinrichtung sowie ein Verfahren zum Betreiben einer Druckluftversorgungseinrichtung zur Verfügung zu stellen, so dass der apparative Gesamtaufwand im Kraftfahrzeug verringert werden kann.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass eine durch das Steuergerät ansteuerbare Ventileinrichtung vorgesehen ist, die das Befüllen und Entlüften von Federbälgen einer pneumatischen Liftachseinrichtung mit aufbereiteter Druckluft direkt steuert. Die Steuerung der Liftachseinrichtung wird somit in eine Druckluftversorgungseinrichtung integriert, die sowohl für die Versorgung der Bremsanlage, der üblichen Nebenverbraucher und für die Versorgung der Liftachseinrichtung vorgesehen ist. Im Unterschied zum Stand der Technik wird durch die Druckluftversorgungseinrichtung nicht lediglich die Druckluft primär zur Verfügung gestellt; vielmehr erfolgen auch die Steuervorgänge direkt durch die Druckluftversorgungseinrichtung. Das Gesamtsystem wird hierdurch vereinfacht, da die elektronische Steuerung einer herkömmlichen Luftaufbereitungsanlage die Aufgaben der Liftachssteuerung mit übernehmen kann; daher kann das üblicherweise für die Bereitstellung des Druckes für die Liftachseinrichtung vorgesehene Überströmventil entfallen.

Nützlicherweise ist vorgesehen, dass ein 3/2-Ventil und ein in Versorgungsströmungsrichtung diesem nachgeschaltetes 2/2-Ventil vorgesehen sind, wobei das 3/2-Ventil zwischen den Zuständen "Befüllen" und "Entlüften" umschaltbar ist und das 2/2-Ventil zwischen den Zuständen "Offen" und "Gesperrt" umschaltbar ist. Durch eine solche Kombination von Ventilen lassen sich die bezogen auf die Liftachseinrichtung erforderlichen Vorgänge steuern.

Weiterhin kann vorgesehen sein, dass dem 3/2-Ventil ein weiteres 2/2-Ventil in Versorgungsströmungsrichtung nachgeschaltet ist, welches zwischen den Zuständen "Offen" und "Gesperrt" umschaltbar ist, und dass jedes der 2/2-Ventile für die Befüllung eines Federbalges vorgesehen ist.

Gemäß einer bevorzugten Ausführungsform der vorliegenden Erfindung ist vorgesehen, dass die 2/2-Ventile gemeinsam ansteuerbar sind. Auf diese Weise wird der apparative Aufwand im Hinblick auf die Auslegung der elektronischen Steuerung gering gehalten.

Es ist aber auch denkbar, dass die 2/2-Ventile getrennt ansteuerbar sind. Die Federbälge lassen sich auf diese Weise individuell befüllen und entlüften.

Es kann nützlich sein, dass eine Drossel vorgesehen ist, die ein Überströmen von Druckluft zwischen Federbälgen gestattet. Hierdurch wird sichergestellt, dass sich mit der Zeit stets ein identisches Druckniveau in den Federbälgen einstellt.

Es ist bevorzugt, dass zur Druckluftversorgung der Liftachseinrichtung eine pneumatische Vorsteuerung vorgesehen ist. Hierdurch können Magnetventile mit geringer Leistung eingesetzt werden, während dennoch hohe Schaltkräfte zum Umschalten der Ventileinrichtung zur Verfügung stehen.

Die Erfindung ist in besonders vorteilhafter Weise dadurch weitergebildet, dass die Druckluftversorgungseinrichtung ein Luftaufbereitungsmodul und ein Liftachsmodul aufweist, dass die Ventileinrichtung zum Versorgen der pneumatischen Liftachseinrichtung in dem Liftachsmodul angeordnet ist, das über Dichtmittel mit dem Luftaufbereitungsmodul verbunden ist, und dass Vorsteuermagnetventile zur pneumatischen Vorsteuerung der Ventileinrichtung in dem Luftaufbereitungsmodul angeordnet sind. Geht man von einer herkömmlichen Druckluftversorgungseinrichtung ohne die Möglichkeit zur Steuerung der Liftachseinrichtung aus, so lässt sich diese funktionell mit dem im Rahmen der vorliegenden Erfindung als Luftaufbereitungsmodul bezeichneten Bauteil identifizieren, mit dem ein weiteres Modul, nämlich das Liftachsmodul, in Verbindung steht. Die Integration der beiden Module zu einer Druckluftversorgungseinrichtung ist nicht notwendig auf die gemeinsame Nutzung der elektronischen Steuerung begrenzt. Vielmehr sind auch die der Ventileinrichtung des Liftachsmoduls zugeordneten Vorsteuermagnetventile innerhalb des Luftaufbereitungsmoduls angeordnet.

Nützlicherweise ist vorgesehen, dass eine Versorgungsleitung der Betriebsbremskreise und eine Versorgungsleitung der Liftachseinrichtung von einer gemeinsamen Versorgungsleitung abzweigen. Diese gemeinsame Versorgungsleitung geht von einem in Versorgungsströmungsrichtung hinter der Trocknerkartusche angeordneten Rückschlagventil aus. In der zu den Bremskreise abzweigenden Versorgungsleitung kann ein zusätzlicher Druckbegrenzer vorgesehen sein.

Die Erfindung baut auf dem gattungsgemäßen Verfahren dadurch auf, dass eine Ventileinrichtung zum direkten Steuern des Befüllens und Entlüftens von Federbälgen einer pneumatischen Liftachseinrichtung mit aufbereiteter Druckluft durch das Steuergerät angesteuert wird. Auf diese Weise werden die Vorteile und Besonderheiten der erfindungsgemäßen Druckluftversorgungseinrichtung auch im Rahmen eines Verfahrens umgesetzt. Dies gilt auch für die nachfolgend angegebenen besonders bevorzugten Ausführungsformen des erfindungsgemäßen Verfahrens.

Dieses ist nützlicherweise dadurch weitergebildet, dass ein 3/2-Ventil und ein in Versorgungsströmungsrichtung diesem nachgeschaltetes 2/2-Ventil vorgesehen sind, wobei das 3/2-Ventil zwischen den Zuständen "Befüllen" und "Entlüften" umgeschaltet wird und das 2/2-Ventil zwischen den Zuständen "Offen" und "Gesperrt" umgeschaltet wird.

Ebenfalls kann vorgesehen sein, dass dem 3/2-Ventil ein weiteres 2/2-Ventil in Versorgungsströmungsrichtung nachgeschaltet ist, welches zwischen den Zuständen "Offen" und "Gesperrt" umgeschaltet wird, und dass jedes der 2/2-Ventile für die Befüllung eines Federbalges vorgesehen ist.

Es kann nützlich sein, dass die 2/2-Ventile gemeinsam angesteuert werden.

Gemäß einer anderen bevorzugten Ausführungsform ist es von Vorteil, dass die 2/2-Ventile getrennt angesteuert werden.

Das erfindungsgemäße Verfahren ist in nützlicher Weise dadurch weitergebildet, dass zur Druckluftversorgung der Liftachseinrichtung eine pneumatische Vorsteuerung erfolgt.

Die Erfindung betrifft weiterhin ein Nutzkraftfahrzeug mit einer erfindungsgemäßen Druckluftversorgungseinrichtung.

Der Erfindung liegt die Erkenntnis zugrunde, dass durch die Integration von. Luftaufbereitung sowie der damit in Verbindung stehenden Komponenten der Druckluftversorgung und der Liftachssteuerung der apparative Aufwand insgesamt verringert werden kann. Zum einen kann für sämtliche Steuerungsaufgaben dieselbe elektronische Steuerung zum Einsatz kommen. Zum anderen sind Komponenten in der Druckluftversorgungseinrichtung entbehrlich, die herkömmlich dazu dienen, die primäre Druckluftversorgung der externen Liftachssteuerung sicherzustellen.

Die Erfindung wird nun mit Bezug auf die begleitenden Zeichnungen anhand bevorzugter Ausführungsformen beispielhaft erläutert.

Dabei zeigt:
- Figur 1: eine Schaltskizze einer bevorzugten Ausführungsform einer erfindungsgemäßen Druckluftversorgungseinrichtung und damit in Verbindung stehender Komponenten; und
- Figur 2: eine erfindungsgemäße Druckluftversorgungseinrichtung in teilweise geschnittener Darstellung.

Bei der nachfolgenden Beschreibung der Zeichnungen bezeichnen gleiche Bezugszeichen gleiche oder vergleichbare Komponenten.

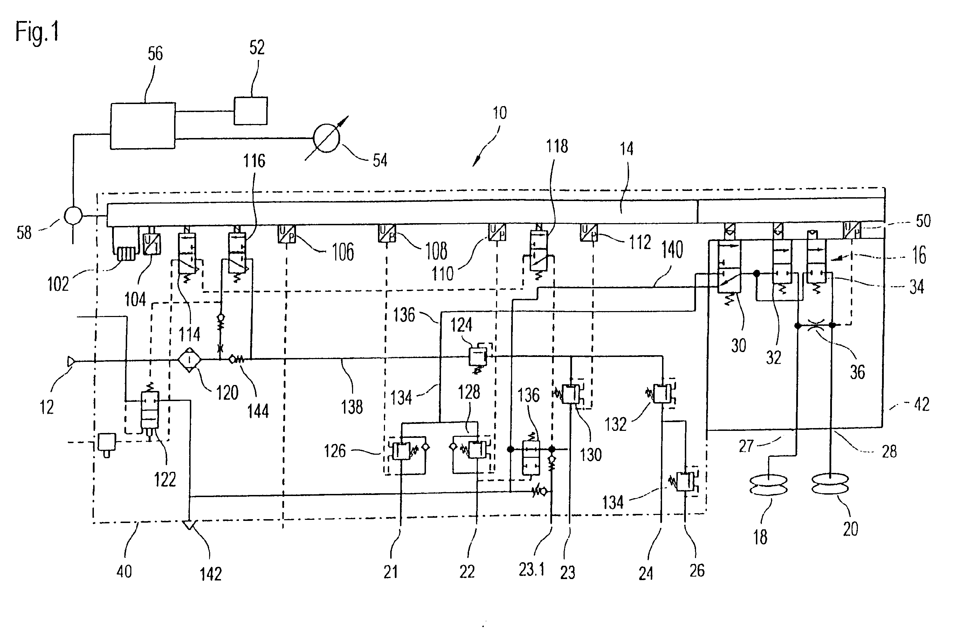

Figur 1 zeigt eine Schaltskizze einer bevorzugten Ausführungsform einer erfindungsgemäßen Druckluftversorgungseinrichtung und damit in Verbindung stehender Komponenten.

Die für das Verständnis der Erfindung weniger wichtigen Komponenten der Druckluftversorgungseinrichtung 10 werden nachfolgend kursorisch abgehandelt. Die folgenden Bauteile stehen innerhalb der Druckluftversorgungseinrichtung 10 mit der elektronischen Steuerung 14 in Verbindung: eine Heizung 102, ein Temperatursensor 104, mehrere Drucksensoren 106, 108, 110, 112, ein Magnetventil 114 zur Druckreglersteuerung, ein Magnetventil 116 zur Regenerationssteuerung sowie ein weiteres der Feststellbremsanlage zugeordnetes Magnetventil 118. Es sind weiterhin eine Trocknerkartusche 120, ein Ablassventil 122, ein Druckbegrenzer 124, mehrere, teilweise von Rückschlagventilen und Drosseln überbrückte Überströmventile 126, 128, 130, 132, ein weiteres 2/2-Ventile sowie mehrere sonstige Rückschlagventile und Drosseln vorgesehen.

Die Druckluftversorgungseinrichtung 10 ist insgesamt so aufgebaut, dass sie ein Luftaufbereitungsmodul 40 und ein Liftachsmodul 42 umfasst. Dem Luftaufbereitungsmodul 40 wird Druckluft über einen Drucklufteingang 12 zugeführt. Diese Druckluft kann einerseits den Ausgängen 21 , 22, 23.1, 2 3, 24, 26 zugeführt werden, andererseits wird die Druckluft der Ventileinrichtung 16 des Liftachsmoduls 42 zugeführt. Diese Ventileinrichtung umfasst ein 3/2-Ventil 30 sowie zwei parallel hinter den 3/2-Venil angeordnete 2/2-Ventile 32, 34. Das 3/2-Ventil sowie die 2/2-Ventile werden von der elektronischen Steuerung 14 angesteuert, wobei Vorsteuermagnetventile für die pneumatische Vorsteuerung der Ventile vorgesehen sind. Der Druck für die pneumatische Ansteuerung der Ventile wird vorzugsweise dem Luftaufbereitungsmodul 40 an einem Knoten entnommen, der in Strömungsrichtung vor dem Druckbegrenzer 124 angeordnet ist. Über die 2/2-Ventile 32, 34 werden die Luftfederbälge 18, 20 der Liftachseinrichtung über die Ausgänge 27, 28 direkt versorgt. Für den Druckausgleich in diesen Luftfederbälgen 18, 20 ist eine Drossel 36 vorgesehen, die die beiden Luftfederbälge 18, 20 koppelt. Weiterhin ist ein Drucksensor 50 zum Ermitteln des Drucks in den Luftfederbälgen 18, 20 vorgesehen.

In dem dargestellten Schaltzustand der Ventileinrichtung 16 sind die Luftfederbälge 18, 20 sowohl vom Druckluftvorrat als auch von der Entlüftung entkoppelt. Werden die 2/2-Ventile 32, 34 in den nicht dargestellten Schaltzustand überführt, so kann im dargestellten Schaltzustand des 3/2-Ventils 30 eine Entlüftung der Luftfederbälge 18, 20 erfolgen. Belässt man die 2/2-Ventile im nicht dargestellten Schaltzustand und ändert den Schaltzustand des 3/2-Ventils 30, so dass es den nicht dargestellten Schaltzustand einnimmt, erfolgt eine Befüllung der Luftfederbälge 18, 20.

Die Versorgungsleitung 134 der Betriebsbremskreise und die Versorgungsleitung 136 der Liftachseinrichtung zweigen von einer gemeinsamen Versorgungsleitung 138 ab. Diese gemeinsame Versorgungsleitung geht von einem in Versorgungsströmungsrichtung hinter der Trocknerkartusche 120 angeordneten Rückschlagventil 144 aus. In der zu den Bremskreisen abzweigenden Versorgungsleitung 134 kann ein zusätzlicher nicht dargestellter Druckbegrenzer vorgesehen sein. Eine Entlüftungsleitung 140 der Liftachseinrichtung mündet in eine Entlüftung 142, die dem Luftaufbereitungsmodul 40 und dem Liftachsmodul 42 gemeinsam ist. Aufgrund der gemeinsamen Be- und Entlüftung von Luftaufbereitungsmodul und Liftachsmodul ist eine zusätzliche Sicherung für die Versorgung des Liftachsmoduls 42 nicht erforderlich.

Die beschriebenen Steuervorgänge der Liftachseinrichtung erfolgen insbesondere in Abhängigkeit der Funktion externer Komponenten. Beispielsweise sind eine Fernbedienung 52 und ein Wegsensor 54 vorgesehen, die über eine Fahrzeugsteuerung 56 am Zentralstecker 58 der Druckluftversorgungseinrichtung angeschlossen sind. Dieser Zentralstecker 58 steht bei herkömmlichen Luftaufbereitungsanlagen zur Verfügung, beispielsweise für den Anschluss der Energieversorgung sowie für den Anschluss an einen Fahrzeugbus. Die Fernbedienung 52 und/oder der Wegsensor 54 für die Betätigung der Liftachseinrichtung können auch direkt am Zentralstecker oder auf andere Weise über den Fahrzeugbus angeschlossen sein. Über den Wegsensor 54 und eventuell mittels anderer Einrichtungen erkennt das Steuergerät 14 ob eine Leckage im System der Luftfederung vorliegt. Ist dies der Fall, so wird eine Warnlampe über den Stecker 58 geschaltet, und die Liftachseinrichtung wird durch das 3/2-Ventil 30 von der Druckluftversorgung getrennt, um einen Druckverlust zu verhindern und eine Aufrechterhaltung des erforderlichen Bremsdrucks sicherzustellen.

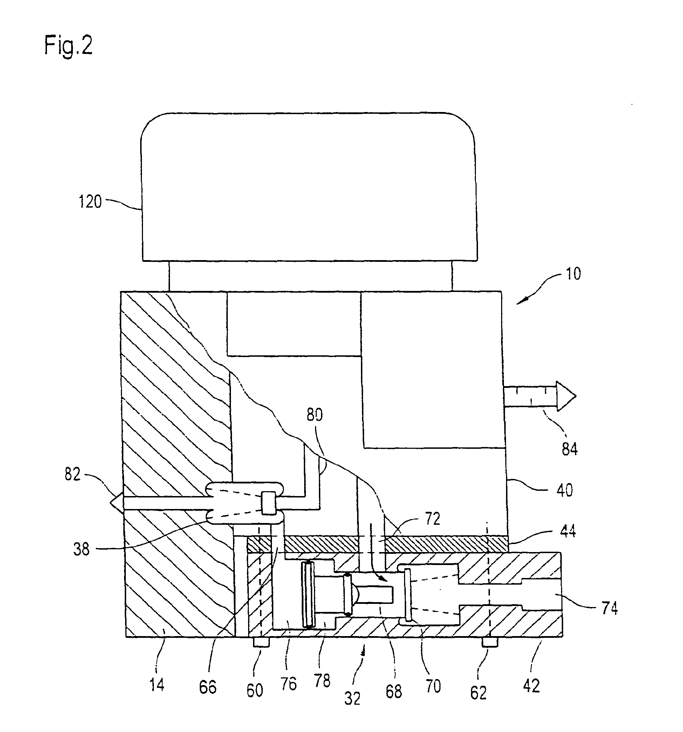

Figur 2 zeigt eine erfindungsgemäße Druckluftversorgungseinrichtung in teilweise geschnittener Darstellung. Die Druckluftversorgungseinrichtung 10 umfasst eine Trocknerkartusche 120, die auf dem Gehäuse des Luftaufbereitungsmoduls 40 aufsitzt. Es ist ein gemeinsamer Schalldämpfer 84 für die gesamte Druckluftversorgungseinrichtung 10 vorgesehen. An dem Luftaufbereitungsmodul 40 ist über eine Dichtung 44 das Liftachsmodul mittels Schrauben 60, 62 angebracht. Das Luftaufbereitungsmodul 40 umfasst neben anderen Komponenten ein Mehrkreisschutzventil 86, einen Druckregler 64 und eine elektronische Steuerung 14. Das Liftachsmodul 42 umfasst eine Ventileinrichtung, wobei in der vorliegenden Darstellung ein 2/2-Ventil 32 beispielhaft dargestellt ist. Über eine Steuerverbindung 66 zwischen dem Luftaufbereitungrsmodul 40 und dem Liftachsmodul 42 kann ein Steuerraum 76 vor einem Steuerkolben 68 in der Weise mit Druckluft beaufschlagt werden, dass ein mit Federkraft beaufschlagter Ventilteller 70 von seinem Ventilsitz abgehoben wird. Folglich kann Druckluft über den Drucklufteingang 72 durch das 2/2-Ventil 32 zum Druckluftausgang 74 strömen. Nach Entlastung des Steuerraums 76 setzt der Ventilteller 70 wieder auf den Ventilsitz auf, so dass die Verbindung zwischen Eingang 72 und Ausgang 74 unterbrochen wird. Um eine unbehinderte Bewegung des Steuerkolbens 68 zu ermöglichen, ist der Rückraum 78 mit einer Entlüftung ausgestattet. Die Vorsteuerung des 2/2-Ventils 32 erfolgt über ein Vorsteuermagnetventil 38, das im Luftaufbereitungsmodul 40 angeordnet ist. Diesem Vorsteuermagnetventil 38 wird über eine Druckluftversorgung 80 Druckluft zugeführt. Im dargestellten Zustand ist das Magnetventil 38 vorzugsweise nicht bestromt. Wird das Magnetventil 38 in den nicht dargestellten Zustand überführt, so wird die Entlüftung 82 geschlossen, und Druckluft kann in den Steuerraum 76 zur Betätigung des 2/2-Ventils gelangen. Im dargestellten Zustand des Magnetventils 38 erfolgt eine Entlüftung des Steuerraums 76 des 2/2-Ventils, so dass dieses schließen kann beziehungsweise im geschlossenen Zustand verbleibt.

In der vorliegenden Darstellung gemäß Figur 2 ist beispielhaft eines der 2/2-Ventile dargestellt. Das weitere 2/2-Ventil und ebenso das 3/2-Ventil liegen hinter beziehungsweise vor dem dargestellten 2/2-Ventil, so dass diese in der vorliegenden Schnittdarstellung nicht erkennbar sind. Im Unterschied zum dargestellten 2/2-Ventil 32 weist beim 3/2-Ventil der Steuerkolben eine zentrale, sich in axiale Richtung erstreckende Bohrung und eine hierzu vorzugsweise senkrecht angeordnete Querbohrung auf. Hierdurch kann die Entlüftungsfunktion des 3/2-Ventils sichergestellt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Druckluftversorgungseinrichtung
- 12: Drucklufteingang
- 14: Steuerung
- 16: Ventileinrichtung
- 18: Liftachseinrichtung
- 20: Liftachseinrichtung
- 21: Druckluftausgang
- 22: Druckluftausgang
- 23: Druckluftausgang
- 23.1: Druckluftausgang
- 24: Ausgang
- 26: Ausgang
- 27: Ausgang
- 28: Ausgang
- 30: 3/2-Ventil
- 32: 2/2-Ventil
- 34: 2/2-Ventil
- 36: Drossel
- 38: Vorsteuermagnetventil
- 40: Luftaufbereitungsmodul
- 42: Liftachsmodul
- 44: Dichtung
- 50: Drucksensor
- 52: Fernbedienung
- 54: Wegsensor
- 56: Fahrzeugsteuerung
- 58: Zentralstecker
- 60: Schrauben
- 62: Schrauben
- 64: Druckregler
- 66: Steuerverbindung
- 68: Steuerkolben
- 70: Ventilteller
- 72: Drucklufteingang
- 74: Druckluftausgang
- 76: Steuerraum
- 78: Rückraum
- 80: Druckluftversorgung
- 82: Entlüftung
- 84: Schalldämpfer
- 86: Mehrkreisschutzventil
- 102: Heizung
- 104: Temperatursensor
- 106: Druck sensor
- 108: Druck sensor
- 110: Druck sensor
- 112: Druck sensor
- 114: Magnetventil
- 116: Magnetventil
- 118: Magnetventil
- 120: Trocknerkartusche
- 122: Ablas sventil
- 124: Druckbegrenzer
- 126: Überströmventil
- 128: Überströmventil
- 130: Überströmventil
- 132: Überströmventil
- 134: Versorgungsleitung Betriebsbremskreise
- 136: Versorgungsleitung Liftachseinrichtung
- 138: Gemeinsame Versorgungsleitung
- 140: Entlüftungsleitung Liftachseintrichtung
- 142: Gemeinsame Entlüftung
- 144: Rückschlagventil

## Patentansprüche

1. Druckluftversorgungseinrichtung mit mindestens einem Drucklufteingang (21) und mehreren Druckluftausgängen (21, 22, 23, 23.1) zum Versorgen mehrerer Bremskreise eines Nutzkraftfahrzeugs mit aufbereiteter Druckluft, und einem Steuergerät (14) zum Steuern von mit der Druckluftversorgung in Zusammenhang stehenden Vorgängen, wobei
- eine durch das Steuergerät (14) ansteuerbare Ventileinrichtung (16) vorgesehen ist, die das Befüllen und Entlüften von Federbälgen einer pneumatischen Liftachseinrichtung (18, 20) mit aufbereiteter Druckluft direkt steuert,
- die Druckluftversorgungseinrichtung ein Luftaufbereitungsmodul (40) und ein Liftachsmodul (42) aufweist und
- die Ventileinrichtung (16) zum Versorgen der pneumatischen Liftachseinrichtung (18, 20) in dem Liftachsmodul (42) angeordnet ist,
**dadurch gekennzeichnet,**
- **dass** Vorsteuermagnetventile (38) zur pneumatischen Vorsteuerung der Ventileinrichtung in dem Luftaufbereitungsmodul (40) angeordnet sind und dass das Liftachsmodul (42) ohne Zwischenschaltung eines Überströmventils aus dem Luftaufbereitungsmodul (40) mit Druckluft versorgt wird.

2. Druckluftversorgungseinrichtung nach Anspruch 1,
**dadurch gekennzeichnet, dass** ein 3/2-Ventil (30) und ein in Versorgungsströmungsrichtung diesem nachgeschaltetes 2/2-Ventil (32) vorgesehen sind, wobei das 3/2-Ventil zwischen den Zuständen "befüllen" und "Entlüften" umschaltbar ist und das 2/2-Ventil zwischen den Zuständen "Offen" und "Gesperrt" umschaltbar ist.

3. Druckluftversorgungseinrichtung nach Anspruch 2, **dadurch gekennzeichnet, dass** dem 3/2-Ventil (30) ein weiteres 2/2-Ventil (34) in Versorgungsströmungsrichtung nachgeschaltet ist, welches zwischen den Zuständen "Offen" und "Gesperrt" umschaltbar ist, und dass jedes der 2/2-Ventile für die Befüllung eines Federbalges (18, 20) vorgesehen ist.

4. Druckluftversorgungseinrichtung nach Anspruch 3, **dadurch gekennzeichnet, dass** die 2/2-Ventile (32, 34) gemeinsam ansteuerbar sind.

5. Druckluftversorgungseinrichtung nach Anspruch 3, **dadurch gekennzeichnet, dass** die 2/2-Ventile getrennt ansteuerbar sind.

6. Druckluftversorgungseinrichtung nach einem der vorangehenden Ansprüche, **dadurch gekennzeichnet, dass** eine Drossel (36) vorgesehen ist, die ein Überströmen von Druckluft zwischen Federbälgen gestattet.

7. Druckluftversorgungseinrichtung nach einem der vorangehenden Ansprüche, **dadurch gekennzeichnet, dass** eine Versorgungsleitung (134) der Betriebsbremskreise und eine Versorgungsleitung (136) der Liftachseinrichtung von einer gemeinsamen Versorgungsleitung (138) abzweigen.

8. Verfahren zum Betreiben einer Druckluftversorgungseinrichtung mit mindestens einem Drucklufteingang (12) und mehreren Druckluftausgängen (21, 22, 23, 23.1) zum Versorgen mehrerer Bremskreise eines Nutzkraftfahrzeugs mit aufbereiteter Druckluft, und einem Steuergerät (14) zum Steuern von mit der Druckluftversorgung in Zusammenhang stehenden Vorgängen, wobei
- eine Ventileinrichtung (16) zum direkten Steuern des Befüllens und Entlüftens von Federbälgen einer pneumatischen Liftachseinrichtung (18, 20) mit aufbereiteter Druckluft durch das Steuergerät (14) angesteuert wird,
- die Druckluftversorgungseinrichtung ein Luftaufbereitungsmodul (40) und ein Liftachsmodul (42) aufweist und
- die Ventileinrichtung (16) zum Versorgen der pneumatischen Liftachseinrichtung (18, 20) in dem Liftachsmodul (42) angeordnet ist,
**dadurch gekennzeichnet,**
- **dass** die Ventileinrichtung durch in dem Luftaufbereitungsmodul (40) angeordnete Vorsteuermagnetventile (38) vorgesteuert wird und
- **dass** das Liftachsmodul (42) ohne Zwischenschaltung eines Überströmventils aus dem Luftaufbereitungsmodul (40) mit Druckluft versorgt wird.

9. Verfahren nach Anspruch 8, **dadurch gekennzeichnet, dass** ein 3/2-Ventil (30) und ein in Versorgungsströmungsrichtung diesem nachgeschaltetes 2/2-Ventil (32) vorgesehen sind, wobei das 3/2-Ventil zwischen den Zuständen "Befüllen" und "Entlüften" umgeschaltet wird und das 2/2-Ventil zwischen den Zuständen "Offen" und "Gesperrt" umgeschaltet wird.

10. Verfahren nach Anspruch 9, **dadurch gekennzeichnet, dass** dem 3/2-Ventil (30) ein weiteres 2/2-Ventil (34) in Versorgungsströmungsrichtung nachgeschaltet ist, welches zwischen den Zuständen "Offen" und "Gesperrt" umgeschaltet wird, und dass jedes der 2/2-Ventile für die Befüllung eines Federbalges (18, 20) vorgesehen ist.

11. Verfahren nach Anspruch 10, **dadurch gekennzeichnet, dass** die 2/2-Ventile (32, 34) gemeinsam angesteuert werden.

12. Verfahren nach Anspruch 10, **dadurch gekennzeichnet, dass** die 2/2-Ventile getrennt angesteuert werden.

## Claims

1. Compressed-air supply device including at least one compressed-air inflow port (21) and several compressed-air discharge ports (21, 22, 23, 23.1) for supplying a plurality of brake circuits of a commercial vehicle with processed compressed air, as well as a controller unit (14) for controlling processes associated with the compressed-air supply, wherein
- a valve means (16) is provided which is adapted to be controlled by said controller unit (14) and which controls the charging and bleeding of resilient bellows of a pneumatic lift axle means (18, 20) with processed compressed air directly,
- said compressed-air supply device includes an air processing module (40) and a lift axle module (42), and
- said valve means (16) for supplying said pneumatic lift axle means (18, 20) is disposed in said lift axle module (42),
**characterised in**
- **that** pilot solenoid valves (38) are disposed in said air processing module (40) for pneumatic pilot control of said valve means, and
- **that** said lift axle module (42) is supplied with compressed air from said air processing module (40), without interposition of an overflow valve.

2. Compressed-air supply device according to Claim 1, **characterised in that** a 3/2 valve (30) and a 2/2 valve (32) connected downstream of said 3/2 valve along the supply flow direction are provided, with said 3/2 valve being adapted to be switched over between the conditions "charging" and "bleeding" and with said 2/2 valve being adapted to be switched over between the conditions "open" and "closed".

3. Compressed-air supply device according to Claim 2, **characterised in that** a further 2/2 valve (34) is disposed downstream of said 3/2 valve (30) along the supply flow direction, which is adapted to be switched over between the conditions "open" and "closed", and that each of said 2/2 valves is provided for charging resilient bellows (18, 20).

4. Compressed-air supply device according to Claim 3, **characterised in that** said 2/2 valves (32, 34) are adapted to be jointly controlled.

5. Compressed-air supply device according to Claim 3, **characterised in that** said 2/2 valves are adapted to be controlled separately.

6. Compressed-air supply device according to any of the preceding Claims, **characterised in that** a throttle (36) is provided which permits overflow of compressed-air between resilient bellows.

7. Compressed-air supply device according to any of the preceding Claims, **characterised in that** a supply line (134) of the service brake circuits and a supply line (136) of said lift axle means branch off a common supply line (138).

8. Method of operating a compressed-air supply device including at least one compressed-air inflow port (12) and several compressed-air discharge ports (21, 22, 23, 23.1) for supplying a plurality of brake circuits of a commercial vehicle with processed compressed air, as well as a controller unit (14) for controlling processes associated with the compressed-air supply, wherein
- a valve means (16) is controlled by said controller unit (14) for directly controlling the operations of charging and bleeding of resilient bellows of a pneumatic lift axle means (18, 20) with processed compressed air,
- said compressed-air supply device includes an air processing module (40) and a lift axle module (42), and
- said valve means (16) for supplying said pneumatic lift axle means (18, 20) is disposed in said lift axle module (42),
**characterised in**
- **that** said valve means is under pilot control by pilot solenoid valves (38) disposed in said air processing module (40) , and
- **that** said lift axle module (42) is supplied with compressed air from said air processing module (40), without interposition of an overflow valve.

9. Method according to Claim 8, **characterised in that** a 3/2 valve (30) and a 2/2 valve (32) connected downstream of said 3/2 valve along the supply flow direction are provided, with said 3/2 valve being switched over between the conditions "charging" and "bleeding" and with said 2/2 valve being switched over between the conditions "open" and "closed".

10. Method according to Claim 9, **characterised in that** a further 2/2 valve (34) is disposed downstream of said 3/2 valve (30) along the supply flow direction, which is switched over between the conditions "open" and "closed", and that each of said 2/2 valves is provided for charging resilient bellows (18, 20).

11. Method according to Claim 10, **characterised in that** said 2/2 valves (32, 34) are jointly controlled.

12. Method according to Claim 10, **characterised in that** said 2/2 valves are controlled separately.

## Revendications

1. Système d'alimentation en air comprimé, comportant au moins une entrée ( 12 ) d'air comprimé et plusieurs sorties ( 21, 22, 23, 23.1 ) d'air comprimé destinées à alimenter plusieurs circuits de freinage d'un véhicule automobile utilitaire en air comprimé traité, et un appareil ( 14 ) de commande destiné à commander des processus associés à l'alimentation en air comprimé, sachant que
- il est prévu un système de soupapes ( 16 ), qui peut être asservi par l'appareil ( 14 ) de commande et qui commande directement le remplissage en air comprimé traité et la ventilation de soufflets ressorts d'un système pneumatique ( 18, 20 ) d'essieu relevable,
- le système d'alimentation en air comprimé comprend un module ( 40 ) de traitement d'air et un module ( 42 ) d'essieu relevable, et
- le système de soupapes ( 16 ) destiné à alimenter le système pneumatique ( 18, 20 ) d'essieu relevable est disposé dans le module ( 42 ) d'essieu relevable,
**caractérisé**
- **en ce que** des électrovannes ( 38 ) de pilotage destinées au pilotage pneumatique du système de vannes sont disposées dans le module ( 40 ) de traitement d'air,
- et **en ce que** le module ( 42 ) d'essieu relevable est alimenté en air comprimé à partir du module ( 40 ) de traitement d'air sans intercalation d'une soupape de décharge.

2. Système d'alimentation en air comprimé selon la revendication 1, **caractérisé en ce qu'**il est prévu une vanne 3/2 voies ( 30 ) et une vanne 2/2 voies ( 32 ) montée en aval de celle-ci dans le sens du courant d'alimentation, sachant que la vanne 3/2 voies peut être commutée entre les positions « remplissage » et « ventilation » et que la vanne 2/2 voies peut être commutée entre les positions « ouverte » et « fermée ».

3. Système d'alimentation en air comprimé selon la revendication 2, **caractérisé en ce qu'**une autre vanne 2/2 voies ( 34 ) est montée en aval de la vanne 3/2 voies ( 30 ) dans le sens du courant d'alimentation et peut être commutée entre les positions « ouverte » et « fermée », et **en ce que** chacune des vannes 2/2 voies est prévue pour le remplissage d'un soufflet ressort ( 18, 20 ).

4. Système d'alimentation en air comprimé selon la revendication 3, **caractérisé en ce que** les vannes 2/2 voies ( 32, 34 ) peuvent être conjointement asservies.

5. Système d'alimentation en air comprimé selon la revendication 3, **caractérisé en ce que** les vannes 2/2 voies peuvent être séparément asservies.

6. Système d'alimentation en air comprimé selon l'une des revendications précédentes, **caractérisé en ce qu'**il est prévu un étranglement ( 36 ), qui autorise une décharge d'air comprimé entre les soufflets ressorts.

7. Système d'alimentation en air comprimé selon l'une des revendications précédentes, **caractérisé en ce qu'**une conduite ( 134 ) d'alimentation des circuits de frein de service et une conduite ( 136 ) d'alimentation du système d'essieu relevable partent en dérivation d'une conduite d'alimentation commune ( 138 ) .

8. Procédé d'utilisation d'un système d'alimentation en air comprimé comportant au moins une entrée ( 12 ) d'air comprimé et plusieurs sorties ( 21, 22, 23, 23.1 ) d'air comprimé destinées à alimenter plusieurs circuits de freinage d'un véhicule automobile utilitaire en air comprimé traité, et un appareil ( 14 ) de commande destiné à commander des processus associés à l'alimentation en air comprimé, sachant que
- l'appareil ( 14 ) de commande asservit un système de vannes ( 16 ) destiné à la commande directe du remplissage en air comprimé traité et de la ventilation de soufflets ressorts d'un système pneumatique ( 18, 20 ) d'essieu relevable,
- le système d'alimentation en air comprimé comprend un module ( 40 ) de traitement d'air et un module ( 42 ) d'essieu relevable, et
- le système de vannes ( 16 ) destiné à alimenter le système pneumatique ( 18, 20 ) d'essieu relevable est disposé dans le module ( 42 ) d'essieu relevable,
**caractérisé**
- **en ce que** le système de vannes est piloté par des électrovannes ( 38 ) de pilotage disposées dans le module ( 40 ) de traitement d'air,
- et **en ce que** le module ( 42 ) d'essieu relevable est alimenté en air comprimé à partir du module ( 40 ) de traitement d'air sans intercalation d'une soupape de décharge.

9. Procédé selon la revendication 8, **caractérisé en ce qu'**il est prévu une vanne 3/2 voies ( 30 ) et une vanne 2/2 voies ( 32 ) montée en aval de celle-ci dans la sens du courant d'alimentation, sachant que la vanne 3/2 voies est commutée entre les positions « remplissage » et « ventilation » et que la vanne 2/2 voies est commutée entre les positions « ouverte » et « fermée ».

10. Procédé selon la revendication 9, **caractérisé en ce qu'**une autre vanne 2/2 voies ( 34 ) est montée en aval de la vanne 3/2 voies ( 30 ) dans sens du courant d'alimentation et est commutée entre les positions « ouverte » et « fermée », et **en ce que** chacune des vannes 2/2 voies est prévue pour le remplissage d'un soufflet ressort ( 18, 20 ).

11. Procédé selon la revendication 10, **caractérisé en ce que** les vannes 2/2 voies ( 32, 34 ) sont conjointement asservies.

12. Procédé selon la revendication 10, **caractérisé en ce que** les vannes 2/2 voies sont séparément asservies.
